Europäisches Patentamt

European Patent Office

Office européen des brevets

(11) Veröffentlichungsnummer: **0 208 377**
A1

(12) **EUROPÄISCHE PATENTANMELDUNG**

(21) Anmeldenummer: 86201164.0

(22) Anmeldetag: 02.07.86

(51) Int. Cl.⁴: **B41J 27/00** , G01F 23/26 , G01D 15/16

(30) Priorität: 06.07.85 DE 3524250

(43) Veröffentlichungstag der Anmeldung:
14.01.87 Patentblatt 87/03

(84) Benannte Vertragsstaaten:
DE FR GB IT SE

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Kringe, Horst**
**Glockenstrasse 34**
**D-5902 Netphen 3(DE)**

(74) Vertreter: **Koch, Ingo et al**
**Philips Patentverwaltung GmbH Billstrasse**
**80 Postfach 105149**
**D-2000 Hamburg 28(DE)**

(54) Anordnung zur Kontrolle des Füllstandes eines Tintenbehälters.

(57) Eine Anordnung zur Kontrolle des Füllstandes eines kollabierbaren Tintenbehälters (1,2), mit einer eine Wechselspannungsquelle (U~) enthaltenden Meßschaltung zur Bildung eines von der Kapazität (8) zwischen der Tintenflüssigkeit und einem dieser gegenüber durch die Wandung des Tintenbehälters isolierten elektrisch leitenden Belag (5) abhängigen elektrischen Steuersignals (11) wird dadurch mit einfachen Mitteln zuverlässiger, daß der elektrisch leitende Belag (5) auf der Außenseite des Unterteils (1) des Tintenbehälters angebracht ist.

## Anordnung zur Kontrolle des Füllstandes eines Tintenbehälters

Die Erfindung bezieht sich auf eine Anordnung zur Kontrolle des Füllstandes eines kollabierbaren Tintenbehälters mit einer eine Wechselspannunsquelle enthaltenden Meßschaltung zur Bildung eines von der Kapazität zwischen der Tintenflüssigkeit und einem dieser gegenüber durch die Wandung des Tintenbehälters isolierten elektrisch leitenden Belag abhängigen elektrischen Steuersignals.

Bei einer nach der DE-OS 28 32 908 bekannten derartigen Anordnung ist der kollabierbare Tintenbehälter in ein steifwandiges Gehäuse eingelegt. Der elektrisch leitende Belag ist an der Innenwandung des steifwandigen Gehäuses angeordnet. Die zwischen der Tintenflüssigkeit und dem elektrisch leitenden Belag gemessene Kapazität hängt nicht nur in gewünschter Weise von der Menge der Tintenflüssigkeit ab, sondern auch davon, wie der Tintenbeutel am steifwandigen Gehäuse anliegt. Im Bereich niedriger Füllgrade, welche durch die Kontrolle ermittelt werden sollen, können sich Randbereiche des Tintenbehälters von der Bodenfläche des Gehäuses abheben. Dadurch wird ein zu niedriger Füllstand vorgetäuscht und eine vorzeitige Auswechslung des Tintenbehälters veranlaßt. Weiterhin ergeben sich Kapazitätsänderungen mit geringer Steilheit, wodurch eine genaue Erfassung des Mindestfüllstandes unter Berücksichtigung der toleranzbedingten Exemplarstreuungen erschwert ist. Infolgedessen besteht die Möglichkeit, daß ein Signal zur Anzeige der Unterschreitung eines Mindestfüllstandes nicht rechtzeitig abgegeben wird. Die erforderlichen Saugkräfte für die Tintenentnahme steigen dann stark an, so daß die Gefahr besteht, daß Luft in die Tintenförderungswege eindringt. Dadurch kann die Funktionsfähigkeit beispielsweise eines Tintenstrahl-Druckkopfes beeinträchtigt werden.

Der Erfindung liegt die Aufgabe zugrunde, die Zuverlässigkeit einer Anordnung der eingangs genannten Art mit einfachen Mitteln zu erhöhen.

Die Lösung gelingt dadurch, daß der Tintenbehälter aus einem Unterteil und einem flexiblen kollabierbaren Oberteil besteht und der elektrisch leitende Belag auf der Außenseite des Unterteils angebracht ist. Vorteilhafte Weiterbildungen der Erfindung sind in den Unteransprüchen gekennzeichnet.

Durch die Erfindung ergibt sich der Vorteil, daß der elektrisch leitende Belag stets einen definierten Abstand zur Oberfläche der Tintenflüssigkeit hat. Ein wesentlicher Unsicherheitsfaktor, welcher zur Verfälschung des Meßergebnisses führen kann, ist damit ausgeschaltet.

Die Benetzungsfläche der Tinte am wannenförmigen Unterteil und damit die gemessene Kapazität nehmen bei Unterschreitung eines bestimmten Füllstandes sehr schnell ab, so daß ein deutliches Warnsignal bei einem vorgegebenen niedrigen Füllstand mit engem Streubereich ableitbar ist.

Es ist weiterhin zur Erhöhung der Selektivität besonders vorteilhaft, nicht lediglich die Kapazität als maßgebliches Kriterium für den Füllstand zu berachten, sondern den Spannungsabfall an der Reihenschaltung des kapazitiven Widerstandes der Meßkapazität und des durch die Tintenflüssigkeit gebildeten ohmschen Widerstandes zu messen.

Die Frequenz der zur Messung verwendeten Wechselspannung ist dabei vorteilhaft so zu wählen, daß der ohmsche Widerstand der Tintenflüssigkeit von der Stromzuführung bis zur Innenwandung des Tintenbehälters und der kapazitive Blindwiderstand etwa die gleiche Größenordnung aufweisen.

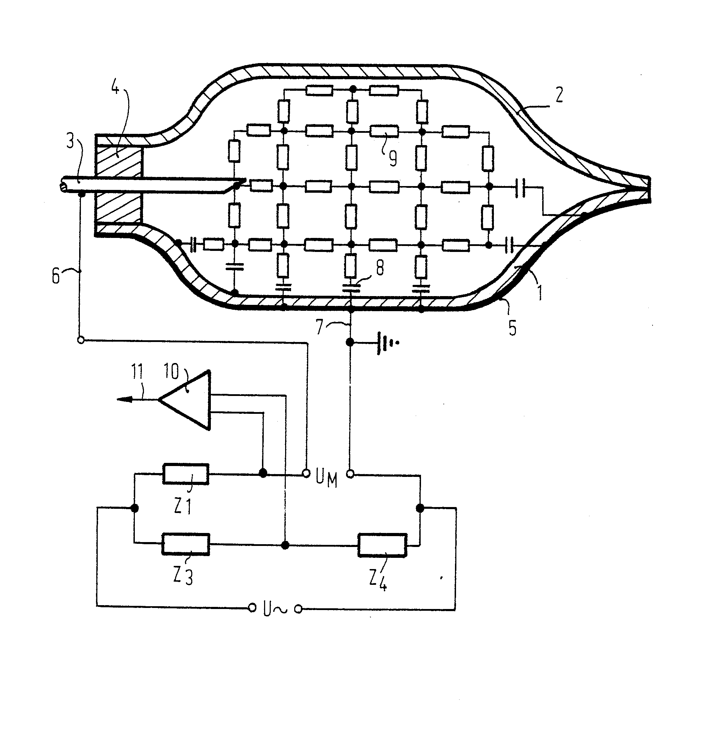

In der Zeichnung ist ein Ausführungsbeispiel der Erfindung schematisch dargestellt.

Die Figur zeigt einen Querschnitt durch einen Tintenbehälter mit außen am Bodenteil angebrachter Metallisierung und eine angeschlossene Meßschaltung.

Der Tintenbehälter besteht aus einem wannenförmigen Isolierstoff-Unterteil 1 und einem flexiblen Oberteil 2. Der durch diese Teile gebildete kollabierbare Innenraum ist luftfrei mit Tintenflüssigkeit ausgefüllt, welche durch eine metallische Anstichkanüle 3 entnehmbar ist, die durch ein abdichtendes Anschlußstück 4 in den Innenraum geführt ist. Das Unterteil 1 kann formstabil sein. Es ist jedoch vorzugsweise ebenfalls flexibel. Die Erfindung ist besonders vorteilhaft anwendbar für einen insgesamt flexiblen Beutel, da in einen solchen nur schwer Elektroden einbringbar sind.

Auf die Außenseite des Unterteils 1 ist eine elektrisch leitende Schicht 5 durch Aufdampfen aufgebracht.

Die Tintenflüssigkeit und die Schicht 5 bilden gegeneinander isolierte flächige Elektroden eines Kondensators mit der dazwischen liegenden Isolierstoffwandung des Unter teils 1 als Dielektrikum. Die Tintenflüssigkeit ist über die Leitung 6 und die Anstichkanüle galvanisch zugänglich und die leitende Schicht 5 über die Anschlußleitung 7, welche mit Erdpotential verbunden ist.

Von der Spannungsquelle $U\sim$ wird ein Strom über den Brückenwiderstand $Z_1$ durch die Tintenflüssigkeit und den von der elektrisch leitenden Schicht 5 und im wesentlichen der gegenüberliegenden Oberfläche der Tintenflüssigkeit gebildeten Kondensator geleitet. Dieser Kondensator ist in Form von einzelnen Kondensatorelementen 8 symbolisch angedeutet. Auf dem Wege von der Anstichkanüle 3 zu den Kondensatorelementen 8 hat der Strom den ohmschen Widerstand der Tintenflüssigkeit zu überwinden, welcher symbolisch als eine Vielzahl von einzelnen Widerstandelementen 9 angedeutet ist.

Der ohmsche Widerstand wird um so größer, je niedriger der Füllgrad des Tintenbehälters ist. Die Kapazität zwischen der Tintenflüssigkeit und der elektrisch leitenden Fläche 5 wird sehr schnell kleiner, wenn die Menge der Tintenflüssigkeit soweit abgenommen hat, daß nur noch Teile der Innenfläche des Tintenbehälters benetzt sind. Dann wird nämlich der Anteil der Fläche der elektrisch leitenden Schicht 5, welcher der Tintenflüssigkeit gegenüber liegt, kleiner.

Der Spannungsabfall $U_M$ durch die Reihenschaltung des Widerstandes der Tintenflüssigkeit und des Kondensators gebildeten Scheinwiderstand wird mit dem Spannungsabfall am Brückenwiderstand $Z_4$ verglichen. Die dem Verstärker 10 zugeführte Differenzspannung dient als Maß für den Füllstand des Tintenbehälters. Ein Ausgangssignal 11 des Verstärkers 10 kann in beliebiger Weise zur Meldung und für Steuerung genutzt werden. Es ist für den Fachmann selbstverständlich, daß die Brückenwiderstände $Z_1$, $Z_2$ und $Z_4$ zumindest teilweise aus Reihenschaltungen von ohmschen Widerständen und Kondensatoren bestehen und beispielsweise derart bemessen werden können, daß im Falle des Erreichens des kritischen minimalen Füllstandes die dem Verstärker 10 zugeführte Differenzspannung zumindest annähernd verschwindet.

## Ansprüche

1. Anordnung zur Kontrolle des Füllstandes eines kollabierbaren Tintenbehälters mit einer eine Wechselspannungsquelle enthaltenden Meßschaltung zur Bildung eines von der Kapazität zwischen der Tintenflüssigkeit und einem dieser gegenüber durch die Wandung des Tintenbehälters isolierten elektrisch leitenden Belag abhängigen elektrischen Steuersignals,

dadurch gekennzeichnet, daß der Tintenbehälter aus einem Unterteil (1) und einem flexiblen kollabierbaren Oberteil (2) besteht, und daß der elektrisch leitende Belag (5) auf der Außenseite des Unterteiles (1) angebracht ist.

2. Anordnung nach Anspruch 1,

dadurch gekennzeichnet, daß das Steuersignal (11) durch den Spannungsabfall an der Reihenschaltung des kapazitiven Widerstandes der Meßkapazität und des durch die Tintenflüssigkeit gebildeten ohmschen Widerstandes gebildet ist.

3. Anordnung nach Anspruch 2,

dadurch gekennzeichnet, daß der Reihenwiderstand der Meßkapazität und des ohmschen Widerstandes der Tintenflüssigkeit einen Zweig einer Meßbrücke bildet.

4. Anordnung nach einem der Ansprüche 1 bis 3,

dadurch gekennzeichnet, daß der elektrisch leitende Belag (5) Erdpotential aufweist, gegenüber welchem eine Wechselspannung über eine metallische Elektrode (3) an die Tintenflüssigkeit gelegt ist.

| Europäisches Patentamt | **EUROPÄISCHER RECHERCHENBERICHT** | Nummer der Anmeldung |

## EINSCHLÄGIGE DOKUMENTE

EP 86201164.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 3 131 756</u> (CANON)<br>  * Fig. 4-8 *<br><br>  -- | 1,4 | B 41 J 27/00<br>G 01 F 23/26<br>G 01 D 15/16 |
| D,A | <u>DE - A1 - 2.832 908</u> (OLYMPIA)<br>  * Fig. 1-3 *<br><br>  -- | 1,4 | |
| A | <u>EP - A2 - 0 028 399</u> (PELIKAN)<br>  * Fig. 3-5; Seite 2, Zeile 6 -<br>  Seite 3, Zeile 14 *<br><br>  -- | 1,4 | |
| A | <u>DE - A1 - 3 037 874</u> (SIEMENS)<br>  * Fig. 1,2,4 *<br><br>  ---- | 1 | |

RECHERCHIERTE SACHGEBIETE (Int. Cl.4)

B 41 J 27/00
G 01 F 23/00
G 01 D 15/00
B 43 K  5/00
B 43 L 25/00

Der vorliegende Recherchenbericht wurde für alle Patentansprüche erstellt.

| Recherchenort | Abschlußdatum der Recherche | Prüfer |
|---|---|---|
| WIEN | 17-10-1986 | GRONAU |